# EUROPEAN PATENT SPECIFICATION

(11) **EP 0 919 558 B1**
(45) Date of publication and mention of the grant of the patent: **11.09.2002**
(21) Application number: 98122658.2
(22) Date of filing: 30.11.1998
(51) Int. Cl.: C07F 7/18, C08L 83/04

(54) **Silatrane derivative, method for manufacturing same, adhesion promoter, and curable silicone compositions**
Silantranderivate, Verfahren zu deren Herstellung, Haftvermittler, und Siliconzusammensetzungen
Dérivées de silatrane, procédé pour le préparer, promoteur d'adhésion et compositions siliconiques durcissables

(30) Priority: 28.11.1997 JP 34429797
(43) Date of publication of application: 02.06.1999
(73) Proprietor: Dow Corning Toray Silicone Company, Ltd., Chiyoda-ku, Tokyo 100-0005 (JP)
(72) Inventor: Yoshitake, Makoto Dow Corn. Toray Sil. Comp., Ltd., Ichihara-shi, Chiba Prefecture (JP)
(74) Representative: Sternagel, Fleischer, Godemeyer & Partner Patentanwälte

(56) References cited:
- CHEMICAL ABSTRACTS, vol. 70, no. 26, 30 June 1969 (1969-06-30) Columbus, Ohio, US; abstract no. 115878, KORISTEK, STANISLAV ET AL: "Laminating resin additives and lubricants for spinning glass fibers" XP002112052 & CS 128 408 1 (KORISTEK, STANISLAV;STEPANEK, JAN)
- CHEMICAL ABSTRACTS, vol. 111, no. 13, 25 September 1989 (1989-09-25) Columbus, Ohio, US; abstract no. 115310, VORONKOV, M. G. ET AL: "1-Organyl-3-[(2-vinyloxyethoxy)methyl]sil atranes" XP002112051 & IZV. AKAD. NAUK SSSR, SER. KHIM. (1989), (3), 740-2 ,1989,

## Description

The present invention relates to a silatrane derivative, a method for manufacturing the same, an adhesion promoter comprising the silatrane derivative, and a curable silicone composition containing the adhesion promoter that exhibits specific adhesion to organic resins.

A silatrane compound expressed by the general formula: 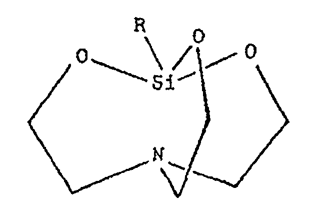 in which R is a methyl group, a phenyl group, a methoxy group, or an ethoxy group is known from U.S. Patent 2,953,545 and JP-A 61-69781. But, when these silatrane compounds are added to a curable silicone composition, the product does not exhibit good adhesion.

The present invention is the result of research for a novel silatrane derivative that would be useful as an adhesion promoter.

Specifically, an object of the present invention is to provide a novel silatrane derivative, an efficient method for its manufacture, an adhesion promoter composed therefrom, and a curable silicone composition containing this adhesion promoter which exhibits specific adhesion to organic resins.

The present invention is a silatrane derivative having the formula: 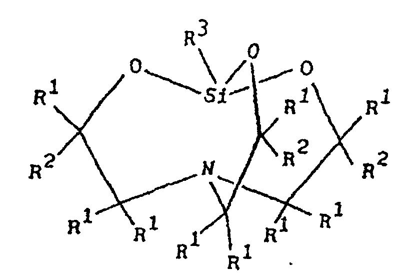 wherein each R¹ is independently a hydrogen atom or an alkyl group; each R² is independently selected from the group consisting of a hydrogen atom, an alkyl group, and an alkenyloxyalkyl group having the formula:

-R⁴-O-R⁵

wherein R⁴ is an alkylene group and R⁵ is an alkenyl group, with the proviso that at least one R² is an akenyloxyalkyl group; and each R³ is independently selected from the group consisting of a monovalent hydrocarbon group, a C₁ to C₁₀ alkoxy group, a glycidoxyalkyl group, an oxiranylalkyl group, an acyloxyalkyl group, a haloalkyl group, and an aminoalkyl group.

The present invention is further directed to a method of preparing the above silatrane derivative, to an adhesion promoter comprising said silatrane, and to a curable silicone composition containing the same.

The silatrane derivative of this invention is expressed by the general formula: 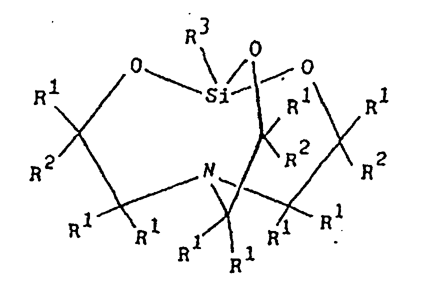 In this formula, each R¹ is independently a hydrogen atom or an alkyl group. Examples of the alkyl group of R¹ include methyl, ethyl, propyl, butyl, pentyl, isopropyl, isobutyl, cyclopentyl, and cyclohexyl. It is particularly favorable for R¹ to be a hydrogen atom or a methyl group. Each R² is independently selected from the group consisting of a hydrogen atom, an alkyl group, and an alkenyloxyalkyl group expressed by the general formula:

―R⁴―O―R⁵

with the proviso that at least one R² group is an alkenyloxyalkyl group.

Examples of the alkyl group of R² are the same as those listed for R¹. For the alkenyloxyalkyl group of R², R⁴ in the formula is an alkylene group, examples of which include methylene, ethylene, methylmethylene. and propylene, with methylene being preferred. R⁵ is an alkenyl group, examples of which include vinyl, allyl, butenyl, pentenyl, and hexenyl, with a C₃ to C₁₀ alkenyl group being preferable, and an allyl group being particularly favorable. Examples of the alkenyloxyalkyl group of R² include an allyloxymethyl group and an allyloxypropyl group. Each R³ is independently selected from the group consisting of substituted or unsubstituted monovalent hydrocarbon groups, C₁ to C₁₀ alkoxy groups, glycidoxyalkyl groups, oxiranylalkyl groups, acyloxyalkyl groups, haloalkyl groups, and aminoalkyl groups. Examples of the monovalent hydrocarbon group of R³ include alkyl groups such as methyl, ethyl, propyl, butyl, pentyl, isopropyl, isobutyl, cyclopentyl, and cyclohexyl; alkenyl groups such as viny, allyl, butenyl, and hexenyl; aryl groups such as phenyl, tolyl, and xylyl; aralkyl groups such as benzyl and phenethyl; and haloalkyl groups such as chloromethyl, 3-chloropropyl, and 3,3,3-trifluoropropyl; examples of the alkoxy group of R³ include methoxy, ethoxy, and propoxy; examples of the glycidoxyalkyl group of R³ include 3-glycidoxypropyl. Further, the oxiranylalkyl group or R³ includes 4-oxiranylbutyl or an 8-oxiranyloctyl. Examples of the acyloxyalkyl group of R³ are selected from acetoxypropyl and 3-methacryloxypropyl. Finally, the aminoalkyl group of R³ consists of 3-aminopropyl or N-(2-aminoethyl)-3-aminopropyl.

The following compounds are examples of the silatrane derivative of the present invention:

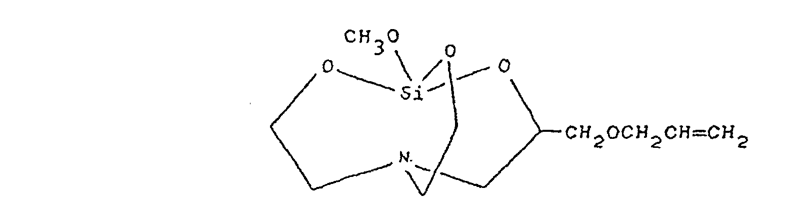

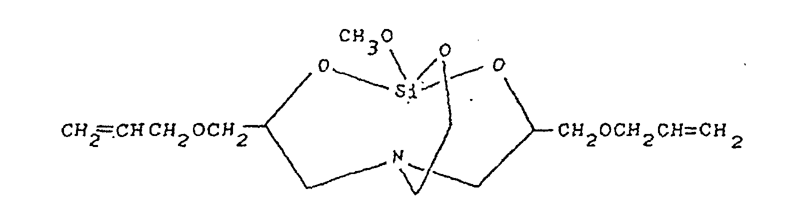

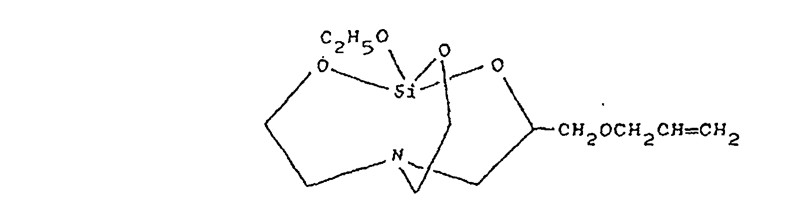

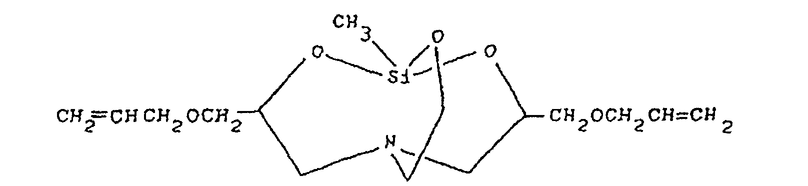

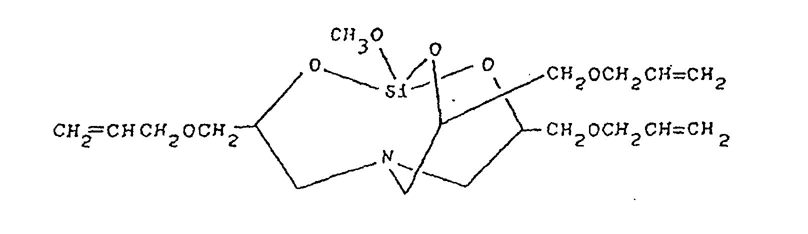

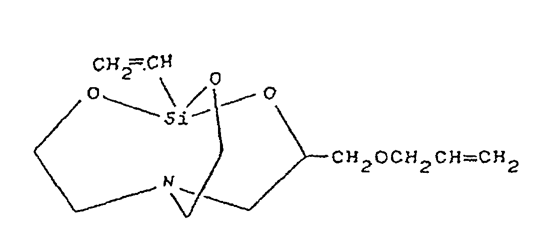

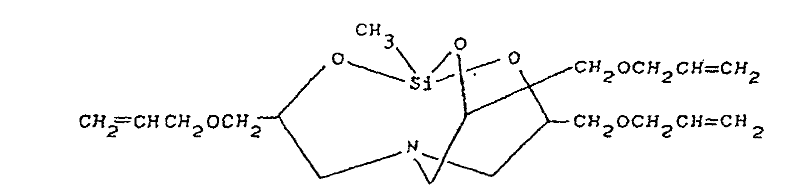

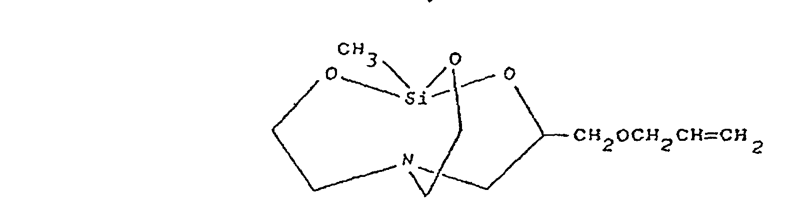

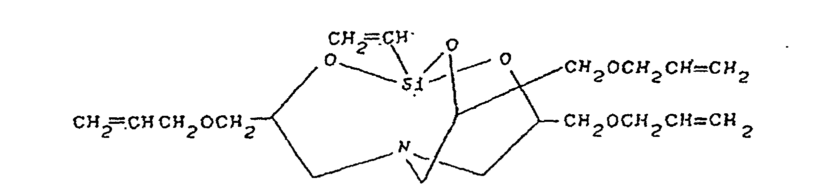

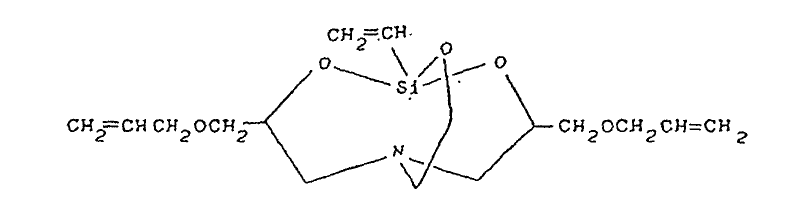

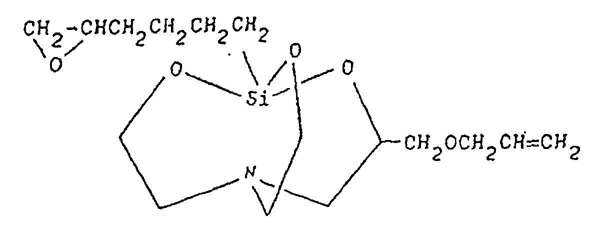

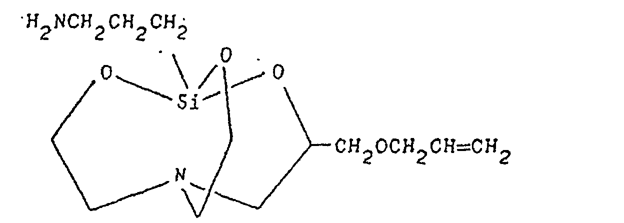

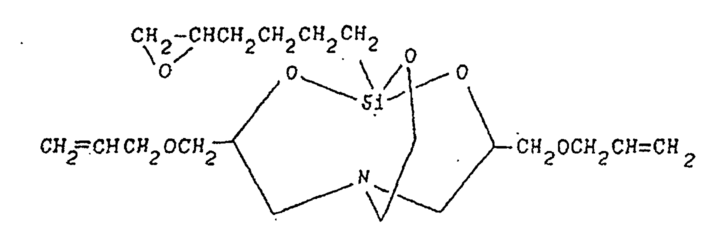

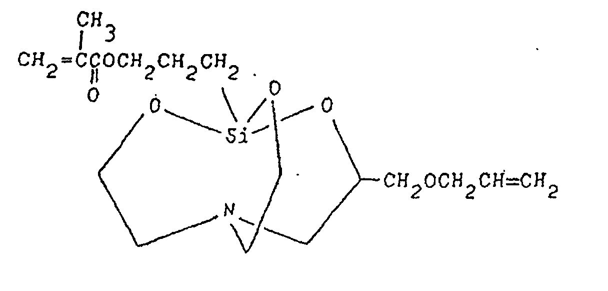

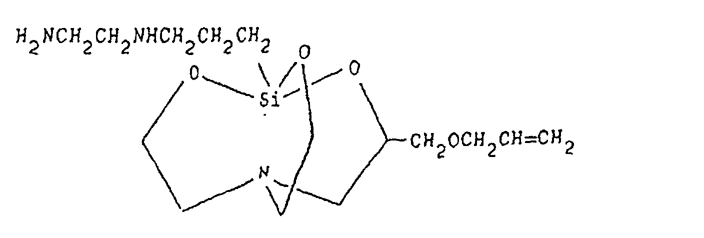

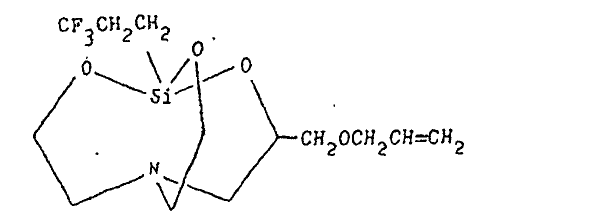

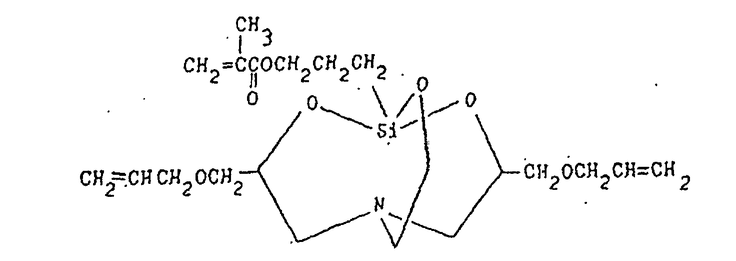

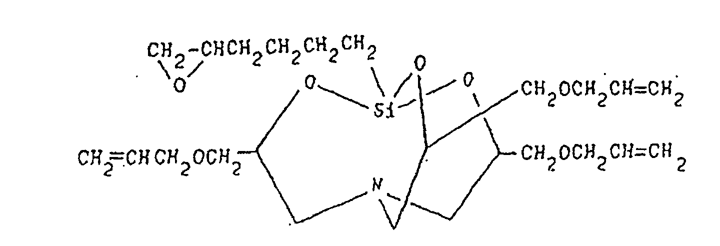

The method of preparing our silatrane derivative comprises reacting an epoxy compound having the formula: 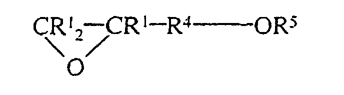 and an alkoxysilane compound having the formula:

R³Si(OR⁶)₃

with a compound selected from ammonia or an amine compound having the formula:

NH_{y}(CR¹ ₂CR¹ ₂OH)_{(3-y)}

wherein each R¹ is independently a hydrogen atom or an alkyl group, each R³ is independently selected from the group consisting of a monovalent hydrocarbon group, a C₁ to C₁₀ alkoxy group, a glycidoxyalkyl group, an oxiranylalkyl group, an acyloxyalkyl group, a haloalkyl group, and an aminoalkyl group; R⁴ is an alkylene group; R⁵ is an alkenyl group; R⁶ is a C₁ to C₁₀ alkyl group; and y is 1 or 2.

The epoxy compound is a raw material for forming the skeleton of the above-mentioned silatrane derivative, and it is also a raw material for introducing alkenyloxyalkyl groups into molecules of said derivative. In the epoxy compound, R¹, R⁴, and R⁵ are as defined above. Preferably R⁵ is a C₃ to C₁₀ alkenyl group, and more preferably R⁵ is an allyl group. Examples of preferred epoxy compounds are allyl glycidyl ether or butenyl glycidyl ether.

The alkoxysilane is also raw material for forming the silatrane derivative of the present invention. R³ in the alkoxysilane is as defined above. R⁶ is a C₁ to C₁₀ alkyl group, examples of which include methyl, ethyl, and propyl. Examples of this alkoxysilane compound are tetramethoxysilane, tetraethoxysilane, methyltrimethoxysilane, methyltriethoxysilane, vinyltrimethoxysilane, vinyltriethoxysilane, phenyltrimethoxysilane, 3-methacryloxypropyltrimethoxysilane, 3,3,3-trifluoropropyltrimethoxysilane, nonafluorobutylethyltrimethoxysilane, 3-aminopropyltrimethoxysilane, 3-aminopropyltriethoxysilane, and N-(2-aminoethyl)-3-aminopropyltrimethoxysilane.

The ammonia or amine compound is a raw material for the silatrane derivative of the present invention. R¹ in the amine compound is as defined above and y is 1 or 2. Examples of this amine compound include 2-hydroxyethylamine, 2,2'-dihydroxyethylamine, and 2-hydroxy-2-methyl-ethylamine.

In the present invention, no limit is imposed on the amounts of the epoxy compound and the alkoxysilane compound added with respect to the ammonia. However, to suppress by-product generation and obtain a good yield, the reaction is conducted under conditions in the presence of ammonia and the epoxy compound is used in amounts of 2 to 20 moles, preferably 3 to 15 moles, per mole of ammonia. The alkoxysilane compound is added in an amount of 0.5 to 50 moles per mole of ammonia, with a range of 1 to 20 moles being preferable. Thus it is recommended that the alkoxysilane compound be used in the stoichiometric amount, or in excess, with respect to the ammonia.

In general, the generation of by-products is also suppressed if the alkoxysilane compound is used in an excess amount to the extent that the reaction does not slow down. However, excess alkoxysilane compound will possibly remain behind. This unreacted alkoxysilane is then separated and recovered from our silatrane derivative by distillation, or the like, following the reaction. This reaction can also be conducted while ammonia gas is blown into a mixture of the epoxy compound and the alkoxysilane compound. When such a reaction is conducted in an open system, part of the ammonia will not react and instead will be released outside the system. Therefore, ammonia must be used in an excess amount corresponding to this loss.

In the present invention, no specific limit is imposed on the amounts of the epoxy and alkoxysilane compounds added with respect to the amine compound. However, to obtain our silatrane derivative at good yield, if y in the amine compound is 1, then the epoxy compound is preferably used in an amount of 0.5 to 10 moles, and more preferably 0.8 to 5 moles, per mole of amine. If y in the amine compound is 2. then the epoxy compound is preferably used in an amount of 1.5 to 20 moles, and more preferably 1.8 to 10 moles, with an amount of 2 mole being particularly favorable. Likewise, the amount in which the alkoxysilane compound is added is preferably 0.5 to 50 moles, and more preferably 1 to 20 moles, per mole of the amine compound. Thus, it is recommended that the alkoxysilane compound be used in the stoichiometric amount, or in excess, with respect to the amine compound. In general, the generation of by-products is also suppressed if the alkoxysilane compound is used in an excess amount to the extend that the reaction does not slow down. However, excess alkoxysilane compound will possibly remain behind. The unreacted alkoxysilane compound is then separately and recovered from our silatrane derivative as needed by distillation, or the like, following the reaction.

With our method for preparing a silatrane derivative, the reaction will proceed either at room temperature or under heating, but heating to 100 °C or below is preferred to reduce the reaction time. The use of an organic solvent is optional, but they can be used and include aliphatic hydrocarbons such as; hexane, heptane, and octane; aromatic hydrocarbons such as toluene or xylene; alcohols such as methanol, ethanol and isopropanol; ketones such as acetone or methyl isobutyl ketone other; ethers such as diethylether or tetrahydrofuran; esters such as ethyl acetate or isoamyl acetate. The use of methanol or ethanol in particular will allow the reaction time to be shortened, and our claimed silatrane derivative to have an even better yield. When alcohol is added, it is preferable to use an alcohol having the same number of carbons as the silicon-bonded alkoxy groups in the initial alkoxysilane compound so that the alkoxy groups bonded to silicon atoms will undergo an alkoxy group exchange reaction during the above reaction. Also, when an alcohol is added in the method of this invention, the reaction is markedly shorter, and the yield of our silatrane derivative is increased, by conducting the reaction at the reflux temperature of said alcohol.

The silatrane derivative of the present invention used, for example, to impart adhesive properties to silicone other curable compositions that are cured by condensation reaction, hydrosilylation reaction, UV rays and high-energy rays. Other curable compositions are represented by alkoxysilane-modified polyether-based compositions, polyurethane resin and rubber compositions, epoxy resin compositions, polysulfide resin compositions, and unsaturated polyester resin compositions. Our silatrane can also be used as a primer which increases the adhesion of the above curable compositions when applied to the surface of metal, glass, plastic, or similar substrates. Our silatrane derivative is particularly useful with silicone and other curable compositions cured by condensation, hydrosilylation, UV rays or other high-energy rays.

The adhesion promoter of our invention may be composed solely of the above-mentioned silatrane derivative, or it may be a mixture of said derivative with a known adhesion promoter and/or a known organic solvent. When our silatrane derivative is used with a known adhesion promoter, it loses its specific adhesion with respect to organic resins; but it displays good adhesion with respect to a variety of materials, such as organic resins, metals, and ceramics. Examples of known adhesion promoters which are used with our silatrane derivative include methyltrimethoxysilane, vinyltrimethoxysilane, allyltrimethoxysilane, 3-methacryloxypropyltrimethoxysilane, 3-glycidoxypropyltrimethoxysilane, 3-aminopropyltrimethoxysilane, N-(2-aminoethyl)-3-aminopropyltrimethoxysilane, bis(trimethoxysilyl)propane, and bis(trimethoxysilyl)hexane.

The amino group-containing alkoxysilane or epoxy compound remaining unreacted through the process of manufacturing our silatrane derivative, as well as any other reaction products, may be left in the final product. In this case, the silatrane derivative content is typically at least 10 wt%, with at least 50 wt% being preferable, and at least 70 wt% being most preferred. The reason for this is that the adhesion promotion effect will be diminished if our silatrane derivative content is below this stated range.

The silatrane derivative of this invention is also conveniently included in any curable composition. The curable silicone composition of our invention is characterized by containing the claimed silatrane derivative. Examples of curable silicone compositions containing this derivative include compositions cured by a condensation reaction such as a dealcoholization reaction, a dehydration reaction, a dehydrogenation reaction, a deoxime reaction, a de-acetic acid reaction, or a de-acetone reaction; compositions cured by hydrosilylation reactions; and silicone compositions cured by high-energy rays. These latter reactions include those involving a mercapto-vinyl addition reaction, an acrylic group radical reaction, or a cationic polymerization reaction for epoxy groups or vinyl ether groups. A silicone composition cured by a hydrosilylation reaction is particularly favorable.

No limit is imposed on the blend amount of our silatrane derivative in the curable composition of the present invention, but said amount is normally from 0.01 to 20 wt%, and preferably from 0.05 to 10 wt%. A range of 0.1 to 5 wt% is particularly desired.

The curable silicone composition of the present invention has a variety of uses, including molding, since is contains a silatrane derivative. More particularly, it displays specific adhesion with respect to organic resins. Accordingly, our curable compositions are conveniently utilized as a production material in cast molding. For example, in the case of an integrated molded article of cured silicone and an organic resin, the silicone adheres well to the organic resin but does not stick to the metal of the mold.

### Example 1

31.5 g (0.3 mole) of 2,2'-dihydroxyethylamine, 81.7 g (0.6 mole) of methyltrimethoxysilane, 45.7 g (0.4 mole) of allyl glycidyl ether, and 32 g of methanol were put into a 500 mL four-neck flask equipped with an agitator, a thermometer, and a reflux condenser. This system was heated and agitated for 5 hours at the methanol reflux temperature. Next, the entire amount of reaction mixture thus obtained was transferred to a pear-shaped flask, and the low-boiling component was distilled off by a rotary evaporator, which yielded 77.6 g of a faintly yellow transparent liquid. This transparent liquid was subjected to ²⁹Si-nuclear magnetic resonance analysis and ¹³C-nuclear magnetic resonance analysis, which confirmed that the silatrane derivative expressed by the following formula had been produced: 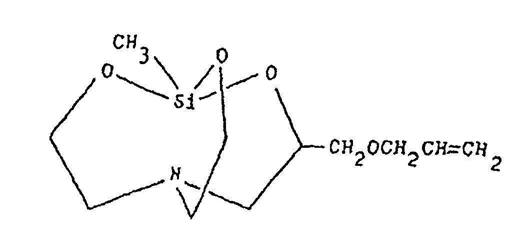 The content of this silatrane derivative was over 90 wt%. This transparent liquid was termed an adhesion promoter.

### Example 2

12.2 g (0.2 mole) of 2-hydroxyethylamine, 81.7 g (0.6 mole) of methyltrimethoxysilane, 57.1 g (0.5 mole) of allyl glycidyl ether, and 32 g of methanol were put into a 500 mL four-neck flask equipped with an agitator, a thermometer, and a reflux condenser. This system was heated and agitated for 8 hours at the methanol reflux temperature. Next, the entire amount of reaction mixture thus obtained was transferred to a pear-shaped flask, and the low-boiling component was distilled off by a rotary evaporator, which yielded 63.3 g of a faintly yellow transparent liquid. This transparent liquid was subjected to ²⁹Si-nuclear magnetic resonance analysis and ¹³C-nuclear magnetic resonance analysis, which confirmed that the silatrane derivative expressed by the following formula had been produced: 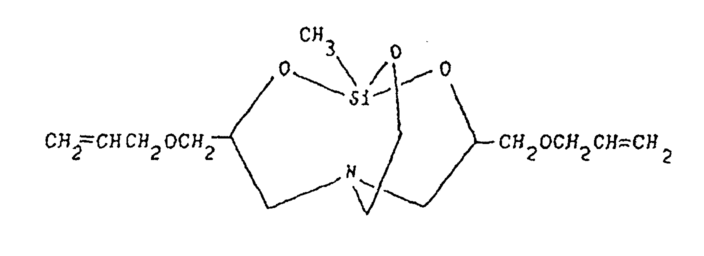 The content of this silatrane derivative was over 90 wt%. This transparent liquid was termed an adhesion promoter.

### Example 3

31.5 g (0.3 mole) of 2,2-dihydroxyethylamine, 88.9 g (0.6 mole) of vinyltrimethoxysilane, 45.7 g (0.4 mole) of allyl glycidyl ether, and 32 g of methanol were put into a 500 mL four-neck flask equipped with an agitator, a thermometer, and a reflux condenser. This system was heated and agitated for 8 hours at the methanol reflux temperature. Next, the entire amount of reaction mixture thus obtained was transferred to a pear-shaped flask, and the low-boiling component was distilled off by a rotary evaporator, which yielded 63.5 g of a faintly yellow transparent liquid. This transparent liquid was subjected to ²⁹Si-nuclear magnetic resonance analysis and ¹³C-nuclear magnetic resonance analysis, which confirmed that the silatrane derivative expressed by the following formula had been produced. 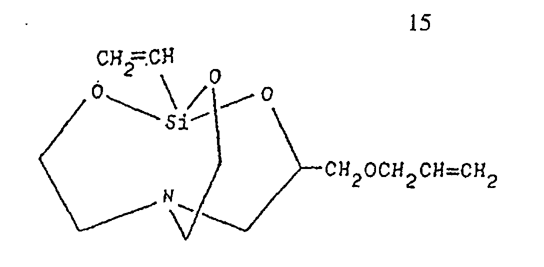 The content of this silatrane derivative was over 90 wt%. This transparent liquid was termed an adhesion promoter.

### Comparative Example 1

12.2 g (0.2 mole) of 2-hydroxyethylamine, 81.7 g (0.6 mole) of methyltrimethoxysilane, 94.5 g (0.4 mole) of 3-glycidoxypropyltrimethoxysilane, and 32.0 g of methanol were put into a 500 mL four-neck flask equipped with an agitator, a thermometer, and a reflux condenser. This system was heated and agitated for 8 hours at the methanol reflux temperature. The entire amount of reaction mixture thus obtained was transferred to a pear-shaped flask, and the low-boiling component was distilled off by a rotary evaporator, which yielded 131.7 g of a faintly yellow transparent liquid. This transparent liquid was subjected to ²⁹Si-nuclear magnetic resonance analysis and ¹³C-nuclear magnetic resonance analysis, which confirmed that the silatrane derivative expressed by the following formula had been produced. 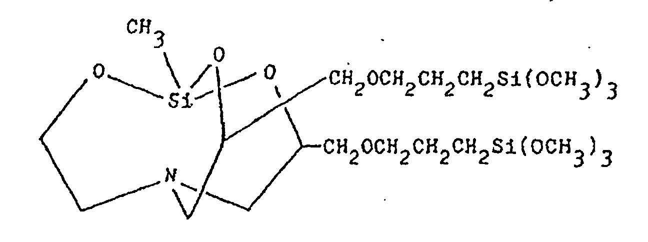 The content of this silatrane derivative was over 90 wt%. This transparent liquid was termed an adhesion promoter.

### Examples 4 to 6 and Comparative Examples 2 and 3

A curable silicone composition was prepared as follows. A dimethylpolysiloxane sequestering agent, terminated at both ends of the molecular chain with dimethylvinylsiloxy groups; fumed silica, whose surface had been rendered hydrophobic by hexamethyldisilazane; a dimethylsiloxane/methylhydrodienesiloxane copolymer sequestering agent, terminated at both ends of the molecular chain with trimethylmethoxy groups; phenylbutynol; and a platinum-based catalyst were uniformly mixed to prepare a hydrosilylation reaction-curable silicone composition.

The adhesion promoters prepared in Examples I to 3 and Comparative Example 1 were each blended in an amount of 1 wt% into this curable silicone composition to prepare four types of a curable silicone composition. For comparison, a curable silicone composition, not containing any of the claimed adhesion promoters, was separately prepared. These latter curable silicone compositions were used to coat the surfaces of the substrates shown in Table 1, after which the coatings were cured by being heated for 30 minutes in a 120°C circulating hot air oven. The cured products thus obtained were in a rubbery form. The adhesion of the five types of silicone rubber with respect to the substrates was evaluated, with a "○" indicating that the silicone rubber adhered well to a substrate, a "Δ" that the silicone rubber partially adhered to a substrate, and a "×" that the silicone rubber peeled completely away from the substrate. The results are given in Table 1.

**Table 1**

| | Present invention | | | Comparative examples | |
|---|---|---|---|---|---|
| | Ex. 4 | Ex. 5 | Ex. 6 | Comp. Ex. 2 | Comp. Ex. 3 |
| Type of adhesion promoter | Ex. 1 | Ex. 2 | Ex. 3 | Comp. Ex. 1 | none |
| Initial adhesion of silicone rubber | | | | | |
| Type of substrate | | | | | |
| Aluminium | x | x | x | ○ | x |
| Stainless steel | x | x | x | ○ | x |
| Glass | Δ | x | x | ○ | x |
| Polycarbonate resin | ○ | ○ | ○ | ○ | x |
| Polybutylene terephthalate resin | ○ | ○ | ○ | ○ | x |
| Phenol resin | ○ | ○ | ○ | ○ | × |

The claimed silatrane derivative of this invention is a novel compound, and our method of preparing said silatrane is efficient. Moreover, the adhesion promoter which contains this novel silatrane, and the curable composition containing the silatrane derivative all display specific adhesion with respect to organic resins and at the same time poor adhesion to other substrates like metals and glass. The capability to give selective adhesion property (good adhesion to organic resins and poor adhesion to metals) to a silicone rubber when used as an additive makes the silatrane derivatives according to the present invention especially useful in molding applications.

## Claims

1. A silatrane derivative comprises a compound having the formula: 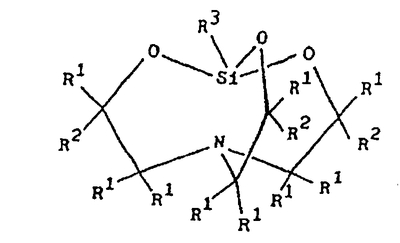 wherein each R¹ is independently a hydrogen atom or an alkyl group; each R² is independently selected from the group consisting of a hydrogen atom, an alkyl group, and an alkenyloxyalkyl group having the general formula:
-R⁴-O-R⁵
wherein R⁴ is an alkylene group and R⁵ is an alkenyl group and each R³ is independently selected from the group consisting of a substituted or unsubstituted monovalent hydrocarbon group, a C₁ to C₁₀ alkoxy group, a glycidoxyalkyl group, an oxiranylalkyl group, an acyloxyalkyl group, a haloalkyl group, and an aminoalkyl group; with the proviso that at least one R² is an alkenyloxyalkyl group

2. A method of preparing the silatrane derivative of claim 1 said method comprising the steps of reacting (i) an epoxy compound having the formula: 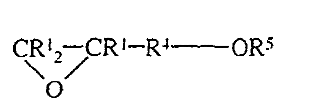 and (ii) an alkoxysilane compound having the formula:
R³Si(OR⁶)₃
with (iii) a compound selected from ammonia or an amine compound having the formula:
NH_{y}(CR¹ ₂CR¹ ₂OH)_{(3-y)}
wherein each R¹ is independently a hydrogen atom or an alkyl group; each R³ is independently selected from the group consisting of a substituted or unsubstituted monovalent hydrocarbon group, a C₁ to C₁₀ alkoxy group, a glycidoxyalkyl group, an oxiranylalkyl group, an acyloxyalkyl group, a haloalkyl group, and an aminoalkyl group; R⁴ is an alkylene group; R⁵ is an alkenyl group; R⁶ is a C₁ to C₁₀ alkyl group; and y is 1 or 2.

3. The method according to claim 2. wherein compound (iii) is ammonia and the epoxy compound is used in an amount from 2 to 20 moles per mole of ammonia.

4. The method according to claim 2, wherein compound (iii) is an amine, y is 1, and the epoxy compound is used in an amount from 0.5 to 10 moles per mole of amine.

5. The method according to claim 2, wherein compound (iii) is an amine, y is 2, and the epoxy compound is used in an amount from 1.5 to 20 moles per mole of amine.

6. The method according to claim 2, wherein the alkoxysilane compound is used in at least a stoichiometric amount relative to compound (iii).

7. The method according to claim 6, wherein compound (iii) is ammonia and the alkoxysilane compound is used in an amount from 0.5 to 50 moles per mole of ammonia.

8. The method according to claim 6, wherein compound (iii) is an amine and the alkoxysilane compound is used in an amount from 0.5 to 50 moles per mole of the amine compound.

9. The method according to claim 6, wherein the alkoxysilane compound is used in stoichiometric excess with respect to compound (iii), said method further comprising the step of separating unreacted alkoxysilane compound from the silatrane derivative.

10. The method according to any of claims 2 to 9, wherein the reaction is conducted at a temperature not greater than 100 °C.

11. The method according to any of claims 2 to 10, wherein the reaction is conducted in the presence of an alcohol having the same number of carbon atoms as R⁶ in compound (ii).

12. Use of the silatrane derivative of claim 1 as adhesion promoter.

13. A curable composition comprising the silatrane derivative of claim 1.

14. The curable composition according to claim 13, wherein the silatrane derivative of claim 1 is present in an amount from 0.01 to 20 weight percent based on the total weight of said composition.

15. The curable composition according to claim 13, wherein said curable composition is selected from silicone compositions and other curable compositions cured by condensation reaction, hydrosilylation reaction, UV rays, and high energy rays.

16. The curable composition according to claim 15, wherein said other curable compositions are selected from alkoxysilane-modified polyether based compositions, polyurethane resin and rubber compositions, epoxy resin compositions, polysulfide resin compositions and unsaturated polyester resin compositions.

## Patentansprüche

1. Silatranderivat, das eine Verbindung mit der Formel 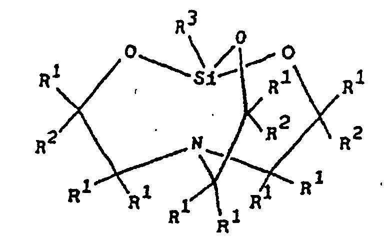 enthält, worin jedes R¹ unabhängig voneinander ein Wasserstoffatom oder eine Alkylgruppe ist, jedes R² unabhängig voneinander ausgewählt ist aus der Gruppe, bestehend aus einem wasserstoffatom, einer Alkylgruppe und einer Alkenyloxyalkylgruppe mit der allgemeinen Formel:
-R⁴-O-R⁵,
worin R⁴ eine Alkylengruppe ist und R⁵ eine Alkenylgruppe ist und jedes R³ unabhängig voneinander ausgewählt ist aus der Gruppe bestehend aus einer substituierten oder unsubstituierten monovalenten Kohlenwasserstoffgruppe, einer C₁-C₁₀-Alkoxygruppe, einer Glycidoxyalkylgruppe, einer Oxiranylalkylgruppe, einer Acyloxyalkylgruppe, einer Halogenalkylgruppe und einer Aminoalkylgruppe, unter der Voraussetzung, dass wenigstens ein R² eine Alkenyloxyalkylgruppe ist.

2. Verfahren zur Herstellung des Silatranderivats nach Anspruch 1, wobei dieses Verfahren die Schritte des Umsetzens von
(i) einer Epoxyverbindung mit der Formel: 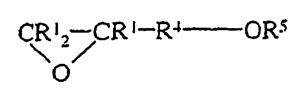 und (ii) einer Alkoxysilanverbindung mit der Formel
R³Si(OR⁶)₃
mit (iii) einer Verbindung, ausgewählt aus Ammoniak oder einer Aminverbindung mit der Formel:
NH_{y}(CR¹ ₂CR¹ ₂OH)_{(3-y)},
umfasst, worin jedes R¹ unabhängig voneinander ein Wasserstoffatom oder eine Alkylgruppe ist, jedes R³ unabhängig voneinander ausgewählt ist aus der Gruppe bestehend aus einer substituierten oder unsubstituierten monovalenten Kohlenwasserstoffgruppe, einer C₁-C₁₀-Alkoxygruppe, einer Glycidoxyalkylgruppe, einer Oxiranylalkylgruppe, einer Acyloxyalkylgruppe, einer Halogenalkylgruppe und einer Aminoalkylgruppe, R⁴ eine Alkylengruppe ist, R⁵ eine Alkenylgruppe ist, R⁶ eine C₁-C₁₀-Alkylgruppe ist und y gleich 1 oder 2 ist.

3. Verfahren nach Anspruch 2, worin Verbindung (iii) Ammoniak ist und die Epoxyverbindung in einer Menge von 2 bis 20 mol pro mol Ammoniak verwendet wird.

4. Verfahren nach Anspruch 2, worin Verbindung (iii) ein Amin ist, y gleich 1 ist und die Epoxyverbindung in einer Menge von 0,5 bis 10 mol pro mol Amin verwendet wird.

5. Verfahren nach Anspruch 2, worin Verbindung (iii) ein Amin ist, y gleich 2 ist und die Epoxyverbindung in einer Menge von 1,5 bis 20 mol pro mol Amin verwendet wird.

6. Verfahren nach Anspruch 2, worin die Alkoxysilanverbindung in einer wenigstens stöchiometrischen Menge in bezug auf Verbindung (iii) verwendet wird.

7. Verfahren nach Anspruch 6, worin Verbindung (iii) Ammoniak ist und die Alkoxysilanverbindung in einer Menge von 0,5 bis 50 mol pro mol Ammoniak verwendet wird.

8. Verfahren nach Anspruch 6, worin Verbindung (iii) ein Amin ist und die Alkoxysilanverbindung in einer Menge von 0,5 bis 50 mol pro mol Aminverbindung verwendet wird.

9. Verfahren nach Anspruch 6, worin die Alkoxysilanverbindung in stöchiometrischem Überschuss in bezug auf Verbindung (iii) verwendet wird, wobei dieses Verfahren weiterhin den Schritt des Abtrennens von nichtumgesetzter Alkoxysilanverbindung von dem Silatranderivat umfasst.

10. Verfahren nach einem der Ansprüche 2 bis 9, wobei die Reaktion bei einer Temperatur von nicht mehr als 100°C durchgeführt wird.

11. Verfahren nach einem der Ansprüche 2 bis 10, wobei die Reaktion in Gegenwart eines Alkohols mit derselben Anzahl an Kohlenstoffatomen wie R⁶ in Verbindung (ii) durchgeführt wird.

12. Verwendung des Silatranderivats nach Anspruch 1 als Haftvermittler.

13. Härtbare Zusammensetzung, enthaltend das Silatranderivat nach Anspruch 1.

14. Härtbare Zusammensetzung nach Anspruch 13, wobei das Silatranderivat nach Anspruch 1 in einer Menge von 0,01 bis 20 Gew.-%, bezogen auf das Gesamtgewicht dieser Zusammensetzung, vorhanden ist.

15. Härtbare Zusammensetzung nach Anspruch 13, wobei diese härtbare Zusammensetzung ausgewählt ist aus Siliconzusammensetzungen und anderen härtbaren Zusammensetzungen, die durch Kondensationsreaktion, Hydrosilylierungsreaktion, UV-Strahlen oder Strahlen hoher Energie gehärtet werden.

16. Härtbare Zusammensetzung nach Anspruch 15, wobei diese anderen härtbaren Zusammensetzungen ausgewählt sind aus Zusammensetzungen auf alkoxysilanmodifizierter Polyetherbasis, Polyurethanharz- und Kautschukzusammensetzungen, Epoxyharzzusammensetzungen. Polysulfidharzzusammensetzungen und ungesättigten Polyesterharzzusammensetzungen.

## Revendications

1. Dérivé de silatrane comprenant un composé ayant pour formule : 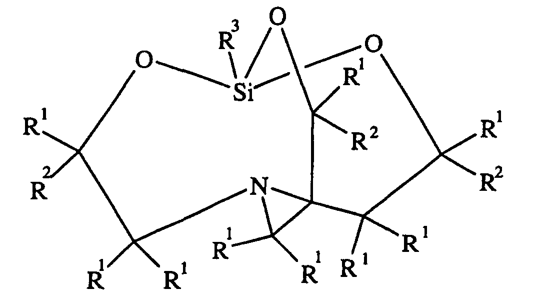 où chaque R¹ est, de façon indépendante, un atome d'hydrogène ou un groupe alkyle ; chaque R² est, de façon indépendante, choisi dans le groupe constitué par un atome d'hydrogène, un groupe alkyle et un groupe alcényloxyalkyle ayant la formule générale :
-R⁴-O-R⁵
où R⁴ est un groupe alkylène et R⁵ est un groupe alcényle et chaque R³ est, de façon indépendante, choisi dans le groupe constitué par un groupe hydrocarboné monovalent substitué ou non substitué, un groupe alcoxy en C₁ à C₁₀, un groupe glycidoxyalkyle, un groupe oxiranylalkyle, un groupe acyloxyalkyle, un groupe halogénoalkyle et un groupe aminoalkyle, sous réserve qu' au moins un R² soit un groupe alcényloxyalkyle.

2. Méthode de préparation du dérivé de silatrane selon la revendication 1, ladite méthode comprenant les étapes consistant à faire réagir (i) un composé époxy ayant pour formule : 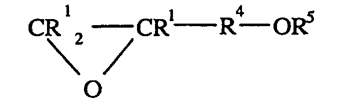 et (ii) un composé alcoxysilane ayant pour formule
R³Si(OR⁶)₃
avec (iii) un composé choisi parmi l'ammoniac ou un composé amine ayant pour formule :
NH_{y}(CR¹ ₂CR¹ ₂OH)_{(3-y)}
où chaque R¹ est, de façon indépendante, un atome d'hydrogène ou un groupe alkyle ; chaque R³ est, de façon indépendante, choisi dans le groupe constitué par un groupe hydrocarboné monovalent substitué ou non substitué, un groupe alcoxy en C₁ à C₁₀, un groupe glycidoxyalkyle, un groupe oxiranylalkyle, un groupe acyloxyalkyle, un groupe halogénoalkyle et un groupe aminoalkyle ; R⁴ est un groupe alkylène ; R⁵ est un groupe alcényle ; R⁶ est un groupe atkyle en C₁ à C₁₀ ; et y est égal à 1 ou 2.

3. Méthode selon la revendication 2, dans laquelle le composé (iii) est de l'ammoniac et le composé époxy est utilisé en une quantité de 2 à 20 moles par mole d'ammoniac.

4. Méthode selon la revendication 2, dans laquelle le composé (iii) est une amine, y est égal à 1 et le composé époxy est utilisé en une quantité de 0,5 à 10 moles par mole d'aminé.

5. Méthode selon la revendication 2, dans laquelle le composé (iii) est une aminé, y est égal à 2 et le composé époxy est utilisé en une quantité de 1,5 à 20 moles par mole d'aminé.

6. Méthode selon la revendication 2, dans laquelle le composé alcoxysilane est utilisé en une quantité au moins stoechiométrique par rapport au composé (iii).

7. Méthode selon la revendication 6, dans laquelle le composé (iii) est de l'ammoniac et le composé alcoxysilane est utilisé en une quantité de 0,5 à 50 moles par mole d'ammoniac.

8. Méthode selon la revendication 6, dans laquelle le composé (iii) est une aminé et le composé alcoxysilane est utilisé en une quantité de 0,5 à 50 moles par mole de composé aminé.

9. Méthode selon la revendication 6, dans laquelle le composé alcoxysilane est utilisé en excès stoechiométrique par rapport au composé (iii), ladite méthode comprenant en outre l'étape de séparation du composé alcoxysilane n'ayant pas réagi du dérivé silatrane.

10. Méthode selon l'une quelconque des revendications 2 à 9, dans laquelle la réaction est conduite à une température non supérieure à 100°C.

11. Méthode selon l'une quelconque des revendications 2 à 10, dans laquelle la réaction est conduite en présence d'un alcool ayant le même nombre d'atomes de carbone que R⁶ dans le composé (ii).

12. Utilisation du dérivé silatrane selon la revendication 1, en tant qu'agent favorisant l'adhérence.

13. Composition durcissable comprenant le dérivé silatrane selon la revendication 1.

14. Composition durcissable selon la revendication 13, dans laquelle le dérivé silatrane selon la revendication 1 est présent en une quantité de 0,01 à 20 % en masse par rapport à la masse totale de ladite composition.

15. Composition durcissable selon la revendication 13, dans laquelle ladite composition durcissable est choisie parmi les compositions de silicone et d'autres compositions durcissables durcies par une réaction de condensation, une réaction d'hydrosilylation, des rayons UV et des rayons de haute énergie.

16. Composition durcissable selon la revendication 15, dans laquelle lesdites autres compositions durcissables sont choisies parmi les compositions à base de polyéther modifié par un alcoxysilane, les compositions à base de résine polyuréthane et de caoutchouc, les compositions à base de résine époxy, les compositions à base de résine polysulfure et les compositions à base de résine polyester insaturée.
